# EUROPEAN PATENT SPECIFICATION

(11) **EP 1 578 592 B1**
(45) Date of publication and mention of the grant of the patent: **20.12.2006**
(21) Application number: 03772957.1
(22) Date of filing: 06.11.2003
(51) Int. Cl.: B29C 70/54, B29C 70/08, B32B 37/00, B32B 15/08

(54) **METHOD FOR PRODUCTION OF A LAMINATE FROM METAL LAYERS AND FIBRE REINFORCED PLASTIC LAYERS**
VERFAHREN ZUR HERSTELLUNG EINES LAMINATS AUS METALLSCHICHTEN UND FASERVERSTÄRKTEN KUNSTSTOFFSCHICHTEN
PROCEDE DE PRODUCTION D'UN LAMINE A PARTIR DE COUCHES METALLIQUES ET DE COUCHES DE PLASTIQUES RENFORCEES PAR DES FIBRES

(30) Priority: 06.11.2002 NL 1021860
(43) Date of publication of application: 28.09.2005
(73) Proprietor: Stork Fokker AESP B.V., 3351 LB Papendrecht (NL)
(72) Inventor: RAJABALI, Abdoel, Faziel, NL-2402 ET Alphen A/D Rijn (NL)
(74) Representative: van Westenbrugge, Andries
(86) International application number: PCT/NL2003/000775
(87) International publication number: WO 2004/041519

(56) References cited:
- DE-A- 4 118 814
- VLOT A ET AL: "Towards Application of Fibre Metal Laminates in Large Aircraft" XP002195138 Retrieved from the Internet: <URL: www.glareconference.com> [retrieved on 2001-09] the whole document

## Description

The invention relates to the field of the production of laminates consisting of alternating metal layers and fibre-reinforced plastic bonding layers as published in "Towards Application of Fibre Metal Laminates in Large Aircraft" by Vlot et al. and representing the preamble of claim 1. Such laminates are used in those fields where panels with a high strength coupled with a low weight are used. Aviation and aerospace represent an important field of application. Especially in the case of such applications, quality requirements also play a major role, in addition to strength and weight requirements. The laminates must have such a high quality that the panels produced therefrom maintain their cohesion for a prolonged period and under fluctuating conditions, such as under substantial temperature fluctuations and substantially varying loads.

A first requirement to ensure the quality of the laminates is that no damage, inaccuracies and the like creep in during the production thereof. With such a high quality process the component parts, such as the metal layers and the plastic sheets, are handled carefully and economically.

For certain operations the risk of damage and the like is relatively high. Such an increased risk arises when centring the various layers of the laminate by means of a centring pin. The centring pin is inserted in a special centring hole made in the laminate for that purpose. It is fixed on the forming jig on which the pack of alternating layers is placed.

After the layers have been bonded to one another in an autoclave, the pack formed in this way is lifted from the forming jig and during this operation is slid off the centring pin. During this operation the problem can arise that, as a result of the sliding movement of the centring pin with respect to the rim of the hole, parts of the layers do not move properly with the rest but remain caught or stick. Furthermore, adhesive can collect in the centring hole, as a result of which this effect is further exacerbated.

The aim of the invention is, therefore, to provide a method for the production of a laminate that better meets the requirements in this regard. Said aim is achieved by means of a method for the production of a laminate consisting of alternating layers of metal and fibre-reinforced plastic bonding layers, comprising the following steps:
- the provision of a forming jig provided with at least one centring pin,
- placing at least two metal layers with a fibre-reinforced plastic bonding layer between them on the forming jig, in which layers there is an opening through which the centring pin extends,
- placing an auxiliary ring on the layers around the centring pin,
- applying an evacuation medium to the layers around the centring pin,
- applying a vacuum film on top of the layers, the centring pin and the aid,
- applying and maintaining a reduced vacuum to the layers between the forming mould and the vacuum film,
- making a hole in the vacuum film and the evacuation medium at the location of the centring pin,
- removing the centring pin via the hole,
- sealing the hole in the vacuum film,
- placing the forming jig with the layers, the auxiliary ring and the blanket in an autoclave,
- activating the bonding layer in the autoclave under the influence of heat and pressure,
- removing the forming jig with the layers bonded to one another from the autoclave.

With the method according to the invention the centring hole is closed off at the top of the pack of layers by means of a tight fitting aid, for example in the form of a ring. The clearance between the centring pin and the covering means is less than the thickness of a metal layer.

When the centring pin is removed from the centring hole any portions dragged along with the centring pin are reliably stripped off by the ring. As a result the laminate largely retains its undisturbed shape.

The centring pin can have been fixed to the forming jig by means of a plug and socket joint as is customary. The blanket placed over the layers comprises a covering medium or "breather layer" and an outer film layer.

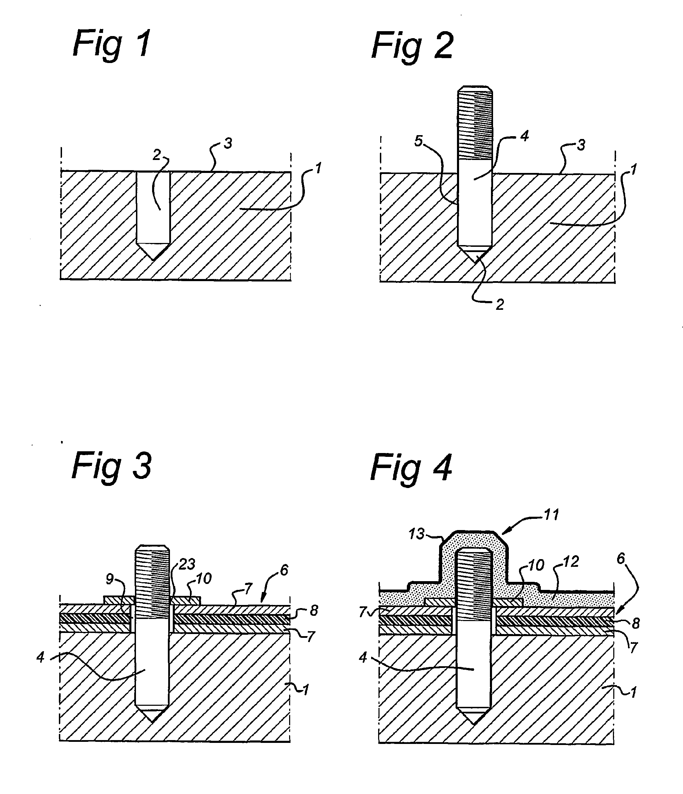

The invention will be explained in more detail below with reference to the steps in the method as shown in Figures 1 - 9.

As is shown in Figure 1, when carrying out the method according to the invention a forming mould 1 is used in which there is at least one hole 2 for a centring pin. The surface 3 of the forming mould has the shape that the panel to be produced must acquire. As shown in the step in Figure 2, a centring pin 4 is inserted in the centring hole 2 of the forming mould 1.

The pack consisting of metal layers 7 and a fibre-reinforced plastic bonding layer 8, which pack is indicated in its entirety by 6, is then placed on the forming jig 1. In these layers 7, 8 there are centring openings 9 in which the centring pin 4 fits with plenty of clearance.

An auxiliary ring 10, the hole 23 of which fits tightly around the centring pin 4 with little clearance, as is shown in Figure 3, is then placed around the centring pin 4.

The blanket, which is indicated in its entirety by 11 is then placed on the top metal layer 7, the auxiliary ring 10 and the centring pin 4, which blanket is made up of an evacuation medium in the form of a so-called breather layer 12 and a covering film 13: see Figure 4. Under the influence of a pressure on the pack 6 generated by a reduced vacuum, the pack is fixed, as a result of which the layers (during and after the removal of the centring pin 4) do not shift with respect to one another. The pressure can be, for example, 65 kPa.

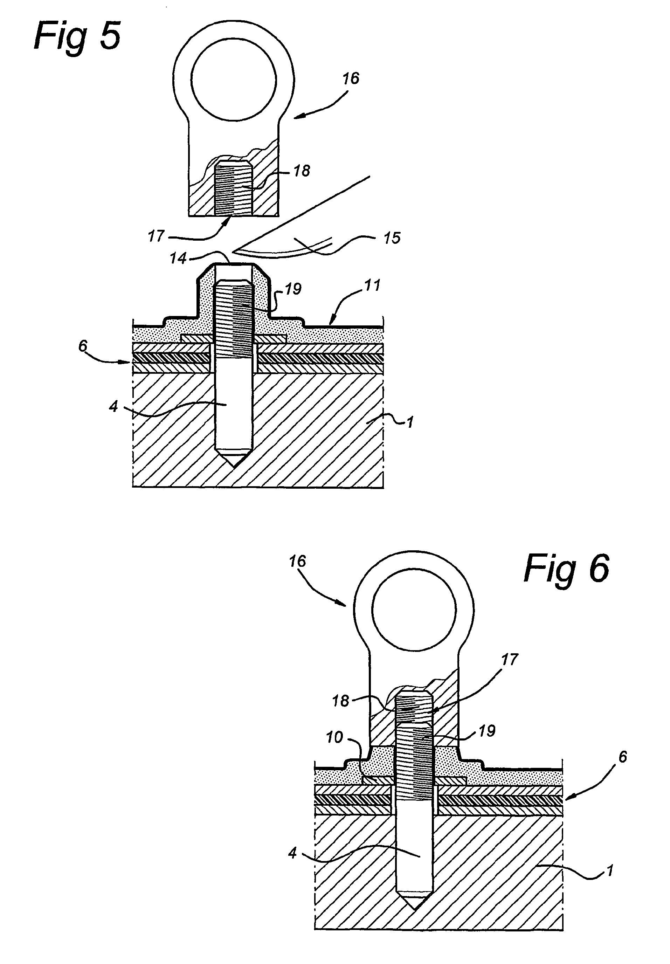

As shown in Figure 5, the portion 14 of the blanket 11 that covers the centring pin 4 is cut open by means of a blade 15. The centring pin 4 can then be removed by means of the tool 16. The tool 16 has an opening 17 with an internal screw thread 18 that is screwed onto the exposed screw thread 19 of the centring pin 4 as shown in Figure 6.

The tool 16 can also be connected to the centring pin 4 in some other way, such as, for example, by clamping with a spring.

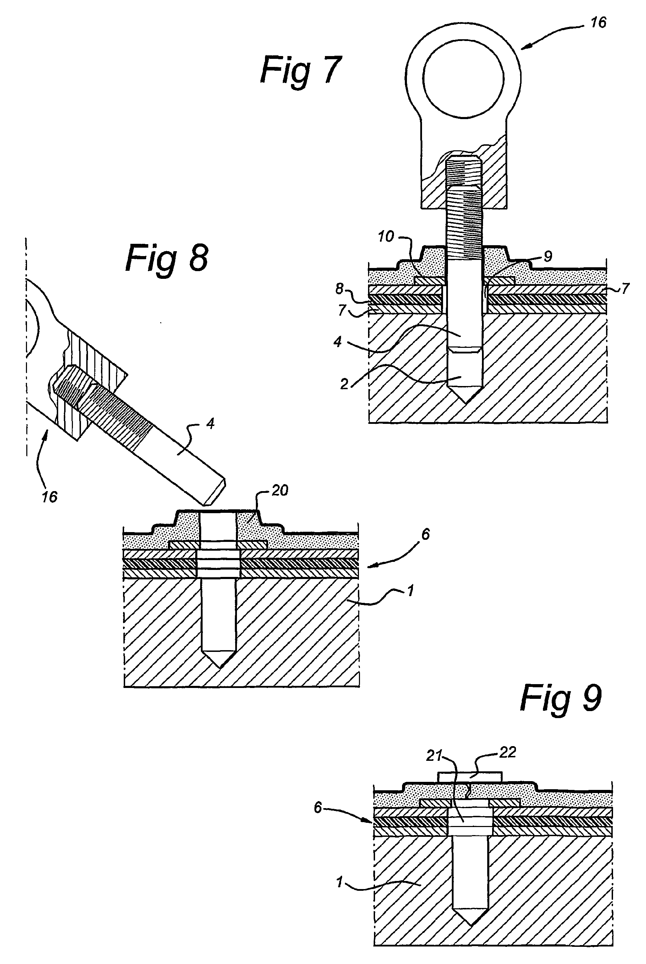

The centring pin 4 can now be pulled out of the centring hole 2 by means of the tool 16 attached in this way: see Figure 7. During this operation the auxiliary ring 10 ensures that the top metal layer is not also pulled upwards out of the hole and would thus bend when the centring pin is removed.

In the position shown in Figure 8, the centring pin 4 has been completely removed by the tool 16, after which the surplus portion 20 of the blanket 11 can be cut away as shown in Figure 9. The gap 21 formed by the removal of the centring pin is closed off by the sealing means 22 during this operation.

Despite opening the covering film 13 when cutting open the blanket 11, the vacuum can still be substantially maintained. This is because the outside air is not able to enter rapidly via the breather layer 12, as a result of which the vacuum cannot reduce substantially before the sealing means are applied.

## Claims

1. Method for the production of a laminate (6) consisting of alternating layers of metal (7) and fibre-reinforced plastic bonding layers (8), **characterized in that** it comprises the following steps:
- the provision of a forming jig (1) provided with at least one centring pin (4),
- placing at least two metal layers (7) with a fibre-reinforced plastic bonding layer (8) between them on the forming jig (1), in which layers (7, 8) there is an opening (9) through which the centring pin (4) extends,
- placing an auxiliary ring (10) on the layers (7, 8) around the centring pin (4),
- applying an evacuation medium (12) to the layers (7, 8) around the centring pin (4),
- applying a vacuum film (13) on top of the layers (7, 8), the centring pin (4) and the aid (10),
- applying and maintaining a reduced vacuum to the layers (7, 8) between the forming mould and the vacuum film (13),
- making a hole in the vacuum film and the evacuation medium (12) at the location of the centring pin (4),
- removing the centring pin (4) via the hole,
- sealing the hole with sealing means (22),
- placing the forming jig (1) with the layers (7, 8), the auxiliary ring (10) and the blanket (11) in an autoclave,
- activating the bonding layer (8) in the autoclave under the influence of heat and pressure,
- removing the forming jig (1) with the bonded pack (6) from the autoclave.

2. Method according to Claim 1, comprising the use of an annular aid (10).

3. Method according to Claim 1 or 2, wherein the centring pin (4) and the auxiliary ring (10) have less clearance than the centring pin (4) and the hole (9) through the layers (7, 8).

4. Method according to one of the preceding claims, comprising fixing the centring pin on the forming jig by means of a plug and socket joint.

5. Method according to one of the preceding claims, comprising the use of a blanket consisting of a breather layer (12) and an outer film layer (13).

## Patentansprüche

1. Verfahren zur Herstellung eines Laminats (6), bestehend aus alternierenden Schichten von Metall (7) und Bindeschichten (8) aus Faser-verstärktem Kunststoff, **dadurch gekennzeichnet, dass** es die folgenden Schritte umfasst:
• das Bereitstellen einer Formungs-Einspannvorrichtung (1), die mit mindestens einem Zentrierstift (4) versehen ist,
• Aufbringen von mindestens zwei Metallschichten (7) mit einer Bindeschicht (8) aus Faser-verstärktem Kunststoff dazwischen auf die Formungs-Einspannvorrichtung (1), wobei die Schichten (7, 8) eine Öffnung (9) aufweisen, durch die sich der Zentrierstift (4) erstreckt,
• Aufbringen eines Hilfsrings (10) um den Zentrierstift (4) herum auf die Schichten (7, 8),
• Aufbringen eines Evakuierungsmediums (12) auf die Schichten (7, 8) um den Zentrierstift (4) herum,
• Aufbringen einer Vakuumfolie (13) über die Schichten (7, 8), den Zentrierstift (4) und die Hilfseinrichtung (10),
• Anlegen und Aufrechterhalten eines verringerten Vakuums auf die Schichten (7, 8) zwischen dem Formwerkzeug und der Vakuumfolie (13),
• Herstellen eines Lochs in der Vakuumfolie und dem Evakuierungsmedium (12) an der Stelle des Zentrierstiftes (4),
• Entfernen des Zentrierstiftes (4) durch das Loch,
• Verschließen des Loches mit Abdichtmitteln (22),
• Verbringen der Formungs-Einspannvorrichtung (1) mit den Schichten (7, 8), dem Hilfsring (10) und dem Presskissen (11) in einen Autoklaven,
• Aktivieren der Bindeschicht (8) in dem Autoklaven unter der Einwirkung von Wärme und Druck,
• Entfernen der Formungs-Einspannvorrichtung (1) mit dem gebundenen Stapel (6) aus dem Autoklaven.

2. Verfahren gemäß Anspruch 1, umfassend die Verwendung einer ringförmigen Hilfseinrichtung (10).

3. Verfahren gemäß Anspruch 1 oder 2, wobei der Zentrierstift (4) und der Hilfsring (10) weniger Spielraum als der Zentrierstift (4) und das Loch (9) durch die Schichten (7, 8) haben.

4. Verfahren gemäß irgendeinem der vorhergehenden Ansprüche, umfassend das Befestigen des Zentrierstiftes auf der Formungs-Einspannvorrichtung mittels einer Steckverbindung.

5. Verfahren gemäß irgendeinem der vorhergehenden Ansprüche, umfassend die Verwendung eines Presskissens, das aus einer Atmungsschicht (12) und einer äußeren Folienschicht (13) besteht.

## Revendications

1. Procédé pour la production d'un stratifié (6) constitué de couches alternées de métal (7) et de couches de liaison (8) en matière plastique renforcées de fibres, **caractérisé en ce qu'**il comprend les étapes suivantes consistant à :
- fournir un gabarit de formation (1) prévu pour recevoir au moins une broche de centrage (4),
- placer au moins deux couches de métal (7), une couche de liaison (8) en matière plastique renforcée de fibres se trouvant entre elles sur le gabarit de formation (1), dans lesdites couches (7, 8) étant ménagée une ouverture (9) à travers laquelle la broche de centrage (4) s'étend,
- placer un anneau auxiliaire (10) sur les couches (7, 8) autour de la broche de centrage (4),
- appliquer un milieu d'évacuation (12) sur les couches (7,8) autour de la broche de centrage (4),
- appliquer un film sous vide (13) sur la partie supérieure des couches (7, 8), de la broche de centrage (4), et de l'anneau auxiliaire (10),
- appliquer et maintenir un vide réduit sur les couches (7, 8) entre le moule de formation et le film sous vide (13),
- réaliser un trou dans le film sous vide et le milieu d'évacuation (12) à l'emplacement de la broche de centrage (4),
- retirer la broche de centrage (4) par l'intermédiaire du trou,
- rendre étanche le trou à l'aide de moyens d'étanchéité (22),
- placer le gabarit de formation (1) avec les couches (7, 8), l'anneau auxiliaire (10), et la couverture (11) dans un autoclave,
- activer le couche de liaison (8) dans l'autoclave sous l'influence de la chaleur et de la pression,
- retirer de l'autoclave le gabarit de formation (1) avec l'ensemble lié (6).

2. Procédé selon la revendication 1, comprenant l'utilisation d'un anneau auxiliaire (10).

3. Procédé selon la revendication 1 ou 2, dans lequel la broche de centrage (4) et l'anneau auxiliaire (10) présentent moins d'espace libre que la broche de centrage (4) et le trou (9) à travers les couches (7, 8).

4. Procédé selon l'une quelconque des revendications précédentes, comprenant l'étape consistant à fixer la broche de centrage sur le gabarit de formation à l'aide d'un joint mâle et femelle.

5. Procédé selon l'une quelconque des revendications précédentes, comprenant l'utilisation d'une protection constituée d'une couche de prise d'air (12) et d'une couche extérieure constituée d'un film (13).
